Europäisches Patentamt

European Patent Office

Office européen des brevets

(11) Veröffentlichungsnummer: **0 296 304**
**A2**

## (12) EUROPÄISCHE PATENTANMELDUNG

(21) Anmeldenummer: 88100284.4

(51) Int. Cl.4: **H01L 23/14**

(22) Anmeldetag: **12.01.88**

Die Bezeichnung der Erfindung wurde geändert (Richtlinien für die Prüfung im EPA, A-III, 7.3).

(30) Priorität: **19.06.87 DE 3720314**

(43) Veröffentlichungstag der Anmeldung:
**28.12.88 Patentblatt 88/52**

(84) Benannte Vertragsstaaten:
**BE CH DE FR GB LI NL SE**

(71) Anmelder: **W.C. Heraeus GmbH**
**Heraeusstrasse 12 - 14**
**D-6450 Hanau / Main(DE)**

(72) Erfinder: **Modes, Christina**
**Flotowstrasse 23**
**D-6100 Darmstadt(DE)**
Erfinder: **Deckelmann, Karl, Dr.**
**Schlossgasse 5**
**D-8750 Aschaffenburg(DE)**
Erfinder: **Orth, Ulrike**
**Rheingolstrasse 44**
**D-6800 Mannheim 24(DE)**
Erfinder: **Dehoust, Jürgen**
**Krotzenburger Strasse 46**
**D-6450 Hanau 9(DE)**
Erfinder: **Burckhardt, Hans-Georg, Dr.**
**Rangenbergstrasse 24**
**D-6000 Frankfurt 60(DE)**

(74) Vertreter: **Heinen, Gerhard, Dr.**
**Heraeus Holding GmbH Heraeusstrasse**
**12-14**
**D-6450 Hanau am Main(DE)**

(54) **Verbundwerkstoff, insbesondere für elektrische Schaltungen.**

(57) Es wird ein gesinterter Kupfer-Molybdän-Verbundwerkstoff mit ebener, poren- und rissefreier Glaskeramik-Schicht beschrieben. Die Glaskeramik setzt sich aus $SiO_2$, $BaO$, $Al_2O_s$ und einem Flußmittel auf PbO-Basis zusammen.

EP 0 296 304 A2

## "Verbundwerkstoff"

Die Erfindung bezieht sich auf einen gesinterten Kupfer-Molybdän-Verbundwerkstoff mit einer anorganischen Isolationsschicht.

Verbundwerkstoffe der vorgenannten Art sind aus der Firmenschrift der Vacuumschmelze GmbH, Hanau, "VACODIL®CM53 Powder Composite, Material based on Copper and Molybdenum for Semiconductor Applications" Preliminary Information Leaflet August 1986 bekannt. Darin beschriebene Verbundwerkstoffe sind beispielsweise mit einer Emailschicht versehen. Sie sollen als Träger für gedruckte Schaltungen, als Bauteil für die Verpackung von intergrierten Schaltkreisen oder als Wärmesenke für Halbleiter verwendet werden. Diese Anwendungsbeispiele ergeben sich daraus, daß der gesinterte CuMo53-Verbundwerkstoff eine hohe Wärmeleitfähigkeit bei geringer elektrischer Leitfähigkeit und kleinem thermischen Ausdehnungskoeffizienten besitzt. Die mit Emailschicht versehenen gesinterten Kupfer-Molybdän-Verbundwerkstoffe können wegen des niedrigen Erweichungspunktes von Email nicht mit für Keramiksubstrate entwickelte Pasten verwendet werden, weil diese Pasten bei Temperaturen oberhalb von 650°c, insbesondere oberhalb von 850°c, eingebrannt werden, also bei Temperaturen oberhalb des Erweichungspunktes von Email.

Die DE-PS 34 26 804 schlägt vor, die vorstehend geschilderten Eigenschaften von mit Emainschicht versehenen Substraten dadurch zu verbessern, daß der Metallträger mit einer aus 40 bis 65 Gewichts-% $SiO_2$, 25 bis 40 Gewichts-% BaO und 5 bis 20 Gewichts-% $Al_2O_3$ bestehenden Glaskeramikschicht, die noch eine Kobalt-Farbstoffverbindung enthält, versehen wird. Das Aufbringen von dieser Glaskeramik auf dichtgesintertem CuMo53-Verbundwerkstoff - dieser Verbundwerkstoff besaß eine Dichte von wenigstens 95 % seiner theoretischen Dichte - führte zu teilweise unebenen Glaskeramikschichten, die kleine Risse und auch Poren aufweisen, was wahrscheinlich auf mangelnde Benetzung des Trägermaterials, das mit einer dünnen aus Cu-Oxid und Mo-Oxid bestehenden Schicht bedeckt ist, zurückzuführen ist. Derartige Substrate eignen sich jedoch nicht für das Aufbringen von gedruckten Schaltungen.

Die Aufgabe der Erfindung besteht darin, die vorteilhaften Eigenschaften von gesinterten Kupfer-Molybdän-Verbundwerkstoffen mit denen einer Glaskeramikschicht derart zu verbinden, daß daraus Substrate mit ebener, risse- und porenfreier Glaskeramikschicht bereitgestellt werden können, ohne daß die vorteilhaften Eigenschaften dieser Schicht, wie Rekristallisation und Beständigkeit, auch bei wiederholtem Einbrand, insbesondere bei Temperaturen oberhalb 850°C, sowie ihre Formstabilität verlorengehen oder erheblich vermindert werden.

Gelöst wird diese Aufgabe für den eingangs charakterisierten Verbundwerkstoff erfindungsgemäß dadurch, daß die Isolationsschicht eine in Stickstoff bei Temperaturen im Berich von 920 bis 960°C eingebrannte Glaskeramikschicht ist aus einer Zusammensetzung aus 48 bis 58 Gewichts-% $SiO_2$, 27,5 bis 41 Gewichts-% BaO, 7 bis 9,9 Gewichts-% $Al_2O_3$ und 2 bis 4,5 Gewichts-% metalloxidisches Flußmittel. Besonders bewährt hat sich eine Glaskeramikschicht, die aus 51 bis 54 Gewichts-% $SiO_2$, 33 bis 36 Gewichts-% BaO, 9,1 bis 9,9 Gewichts-% $Al_2O_3$ und 2,8 bis 4 Gewichts-% metalloxidischen Flußmitteln besteht. Als wesentliche Komponente enthält das Flußmittel erfindungsgemäß PbO. Besonders gute Ergebnisse werden erzielt, wenn das Flußmittel PbO, ZnO, CaO, $B_2O_3$ und $TiO_2$ enthält, die im Verhältnis PbO : ZnO : CaO : $B_2O_3$ : $TiO_2$ = 5 : 2 :2 : 1,5 : 1 vorliegen. Durch den Zusatz der Flußmittelmischung wird eine Herabsetzung der Viskosität der Glaskeramik bei den Einbrandtemperaturen oberhalb 850°C bewirkt, was zu guter Fließfähigkeit in dem Temperaturbereich von 920 bis 960°C führt. Als Ergebnis erhält man gesinterte Kupfer-Molybdän-Verbundwerkstoffe mit einer völlig ebenen, poren- und rissefreien, auch bei wiederholtem Einbrand rekristallisierenden Glaskeramikschicht.

Erfindungsgemäße Verbundwerkstoffe mit Glaskeramikschicht eignen sich besonders gut als Substrate für gedruckte Schaltungen, insbesondere solche, wie sie auf dem Gebiet der Kraftfahrzeug-Elektronik verwendet werden, weil diese beschichteten Verbundwerkstoffe sich als unempfindlich gegen Erschütterungen erwiesen haben.

Durch Variation des Kupfer-Molybdän-Prozentgehaltes kann der thermische Ausdehnungskoeffizient des Verbundwerkstoffte variiert werden und beispielsweise dem eines Halbleiter-Siliziumplättchens, das auf die Glaskeramikschicht aufgebracht ist, angeglichen werden. Der erfindungsgemäße Verbundwerkstoff dient in diesem Fall als Substrat für einen Leitungshalbleiter.

Wie an sich bekannt, kann die Glaskeramik beim erfindungsgemäßen Verbundwerkstoff auch eine Kobalt-haltige Farbstoffverbindung in einer Menge vis zu 5 Gewichts-% enthalten. Durch diese bläuliche Färbung der Glaskeramik erzielt man einen gut sichtbaren Kontrast, beispielsweise zu einer darauf aufgedruckten Widerstandspaste.

Als Verbundwerkstoff hat sich besonders ein solcher bewährt, der aus 47 Gewichts-% Kupfer und 53 Gewichts-% Molybdän besteht und eine Dichte von wenigstens 95 % seiner theoretischen Dichte besitzt.

Erfindungsgemäße Verbundwerkstoffe, bei denen Teilbereiche der Oberfläche eines Kupfer-Molybdän-Plättchens mit Glaskeramik beschichtet sind, bieten die Möglichkeit, sie als Substrat für gedruckte Schaltungen und gleichzeitig als Konstruktionselement bzw. Bauteil, wie Deckel für ein Gehäuse, zu verenden.

Anhand des nachfolgenden Beispiels wird die Herstellung eines erfindungsgemäßen Verbundwerkstoffes beschrieben.

Ein Bleck aus gesintertem CuMo53-Verbundwertstoff einer Größe von 25,4 x 25,4 mm und einer Dicke von 1,5 mm wird zunächst sandgestrahlt und anschließend in einem Ultraschallbad für eine Dauer von 3 Minuten in Aceton gereinigt. Auf das so vorbehandelte Blech wird im Siedruckverfahren eine Paste aufgebracht, die aus 80 Gewichts-% einer pulverförmigen Substanz und 20 Gewichts-% eines unter Stickstoff ausbrennbaren organischen Trägermittels besteht. Die pulverförmige Substanz ist wie folgt zusammengesetzt: 53 Gewichts-% $SiO_2$, 33,9 Gewichts-% BaO, 9,6 Gewichts-% $Al_2O_3$ sowie 3,5 Gewichts-% metalloxidisches Flußmittel, das aus den Komponenten PbO, ZnO, CaO, $B_2O_3$ und $TiO_2$ besteht, die im Verhältnis PbO : ZnO : CaO : $B_2O_3$ : $TiO_2$ = 5 : 2 :2 : 1,5 : 1 vorliegen. Das organische Trägermittel besteht aus einer Mischung von 14 Masse-% Tridecylalkohol, 5,96 Masse-% Polybutylmethacrylat und 0,04 % hydriertes Rizinusöl. Die im Siebdruck aufgebrachte Schicht wird nun 10 Minuten bei einer Temperatur von 150 °C ge trocknet. Danach wird das getrocknete Blech in einen handelsüblichen Durchlaufofen eingebracht und 55 Minuten unter Stickstoff-Atmosphäre eingebrannt, wobei während des Einbrennens 10 Minuten lang eine Spitzentemperatur von 970 °C herrscht. Der Ofen wird zunächst mit gereinigtem Stickstoff gespült. Während des Einbrennens enthält die Ofenatmosphäre noch einen Sauerstoffgehalt von etwa 2 bis 8 ppm.

Figur 1 ist eine Aufsicht auf einen erfindungsgemäß ausgebildeten Verbundwerkstoff.

Figur 2 stellt einen Schnitt entlagng der Linien A - B von Figur 1 dar.

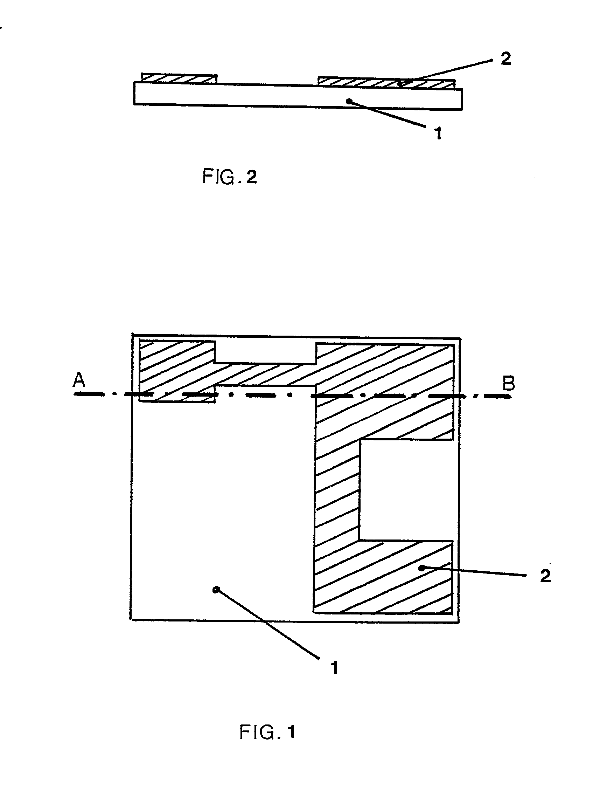

In den Figuren 1 und 2 ist die Bezugsziffer 1 dem Verbundwerkstoff und die Bezugsziffer 2 der Glaskeramik zugeordnet.

Wie aus Figur 1 ersichtlich, sind nur Teilbereiche der Oberfläche des aus 47 Gewichts-% Kupfer und 53 Gewichts-% Molybdän bestehenden Verbundwerkstoffes 1 mit der Glaskeramik 2, die erfindungsgemäß zusammengesetzt ist, bedenkt. Es handelt sich dabei um die Aufsicht auf einen Gehäusedeckel eines elektronischen Bauelements.

Die Glaskeramikschicht ist im Gebrauchszustand dem Gehäuseinnern zugekehrt und mit einer intergrierten Schaltung versehen.

## Ansprüche

1. Gesinterter Kupfer-Molybdän-Verbundwerkstoff mit einer aufgebrachten anorganischen Isolationsschicht, dadurch gekennzeichnet, daß die Isolationsschicht eine in Stickstoff bei Temperaturen im Bereich von 920 bis 960 °C eingebrannte Glaskeramikschicht ist aus einer Zusammensetzung aus 48 bis 58 Gewichts-% $SiO_2$, 27,5 bis 41 Gewichts-% BaO, 7 bis 9,9 Gewichts-% $Al_2O_3$ und 2 bis 4,5 Gewichts-% metalloxidisches Flußmittel.

2. Verbundwerkstoff nach Anspruch 1 dadurch gekennzeichnet, daß die Glaskeramikschicht aus 51 bis 54 Gewichts-% $SiO_2$, 33 bis 36 Gewichts-% BaO, 9,1 bis 9,9 Gewichts-% $Al_2O_3$ und 2,8 bis 4 Gewichts-% metalloxidischen Flußmitteln besteht.

3. Verbundwerkstoff nach den Ansprüchen 1 oder 2, dadurch gekennzeichnet, daß das Flußmittel als wesentliche Komponente PbO enthält.

4. Verbundwerkstoff nach einem oder mehreren der vorhergehenden Ansprüche, dadurch gekennzeichnet, daß das Flußmittel PbO, ZnO, CaO, $B_2O_3$ und $TiO_2$ enthält, die im Verhältnis PbO : ZnO : CaO : $B_2O_3$ : $TiO_2$ = 5 : 2 :2 : 1,5 : 1 vorliegen.

5. Verbundwerkstoff nach einem oder mehreren der vorhergehenden Ansprüche, dadurch gekennzeichnet, daß die Glaskeramikschicht eine Kobalt-Farbstoffverbindung in einer Menge bis zu 5 Gewichts-% enthält.

6. Verbundwerkstoff nach einem oder mehreren der vorhergehenden Ansprüche, dadurch gekennzeichnet, daß er aus 47 Gewichts-% Kupfer und 53 Gewichts-% Molybdän besteht und Dichte von wenigstens 95 % seiner theoretischen Dichte besitzt.

7. Verbundwerkstoff nach einem oder mehreren der vorhergehenden Ansprüche, dadurch gekennzeichnet, daß die Glaskeramikschicht in mehrere voneinander beabstandete Teilbereiche unterteilt ist.

FIG.2

FIG.1